# EUROPEAN PATENT APPLICATION

(11) **EP 4 561 098 A1**
(43) Date of publication of application: **28.05.2025**
(21) Application number: 23211362.1
(22) Date of filing: 22.11.2023
(51) Int. Cl.: H04R 1/10

(54) **A DOCK FOR A CRADLE FOR EARBUDS**

(71) Applicant: GN Hearing A/S, 2750 Ballerup (DK)
(72) Inventor: LERSTRUP, Anders, 2750 Ballerup (DK)
(74) Representative: Zacco Denmark A/S

(57) **Abstract**

Disclosed is a dock for a cradle, the cradle being configured for accommodating a pair of ear buds for a user, the dock comprising a user interface configured for providing control of one or more functionalities of the earbuds; and a fixation means configured for fixating the cradle in the dock.

## Description

### FIELD

The present invention relates to a dock for a cradle, where the cradle is configured for accommodating a pair of earbuds for a user.

### BACKGROUND

Many people today use earbuds for example for phone calls or listening to media, such as music, radio or podcasts, via their smartphone, computer etc. Many people prefer the earbuds to be small, lightweight and wireless. Such earbuds may have rechargeable batteries, but when a person uses the earbuds a lot, the batteries may be depleted completely during the day. Thus, there is a need for an improved solution for charging and storing of earbuds.

### SUMMARY

Disclosed is a dock for a cradle. The cradle being configured for accommodating a pair of earbuds for a user. The dock comprises a user interface configured for providing control of one or more functionalities of the earbuds. The dock comprises a fixation means configured for fixating the cradle in the dock.

The dock may be a base, a station or the like for the cradle. The cradle may be a case, a casing, a charging box or the like for the earbuds. The earbuds may be a hearing device, an audio device, earpieces or the like. Typically, there may be a pair of earbuds, i.e. two earbuds, one earbud for each ear of the user. The earbuds may be a first earbud and a second earbud. The earbuds may be a left earbud and a right earbud, e.g. an earbud for the left ear of the user and an earbud for the right ear of the user. The earbuds may be true wireless earbuds, i.e. having no wires to other devices or to each other. The earbuds may have one big push button on the front for controlling functionalities.

The cradle is configured for accommodating the pair of earbuds. The earbuds may be in the cradle when the earbuds are not in use by the user, the cradle then being for protecting the earbuds when they are not in use, such as when transporting the earbuds. The cradle may also be configured for charging the earbuds, thus the earbuds may be placed in the cradle, when charging of the earbuds is relevant or needed. Thus, the cradle may be a charging cradle for the earbuds, and the cradle may comprise a space for the earbuds, where the ear buds are configured to placed for charging the earbuds.

The dock comprises a user interface configured for providing control of one or more functionalities of the earbuds. The user interface may be controlled by touch input from the user's fingers.

The dock comprises a fixation means configured for fixating the cradle in the dock.

The functionalities of the earbuds may be controlled, when the cradle is fixated in the dock. The functionalities of the earbuds may be controlled, when the cradle is not fixated in the dock, but when the cradle is outside the dock. The functionalities of the earbuds may be controlled, when the earbuds are in the cradle, and/or when the earbuds out of the cradle.

It is a problem of prior art earbuds that users are sometimes afraid to use the push or touch button on the earbuds when being in a call, because users are afraid to end the call if pushing/touching the push/touch button.

Thus, it is an advantage of the present dock that the functionalities of the earbuds can be controlled on the user interface of the dock.

It is an advantage of the present dock that functionality can be added to the earbuds, such as true wireless earbuds, without compromising the size, shape or portability of neither the earbuds nor the cradle. Thus, the size or shape of the earbuds shall not be bigger or changed, the earbuds can maintain their small size and shape. Thus, the size and portability of the cradle shall not be bigger or changed, the cradle can maintain its size and portability.

It is an advantage of the present dock that it may be relative heavy and steady and be wellgrounded on a table without compromising on the size, shape or portability of the cradle. Prior art cradles are typically too lightweight and flimsy to be handled with one hand by the user when placed on a table. For example, in prior art cradles, the user may have to use two hands to take the earbuds in and out of the cradle, or use two hands to interact with buttons on the cradle, because the cradle is small and lightweight. Thus, it is an advantage that when the cradle is fixated in the dock, the earbuds can easily be handled with one hand by the user, because the cradle is steady in the dock that stands on a tabletop.

It is an advantage that the earbuds may always be connected with other devices, because the earbuds are kept in the cradle which is fixated in the dock. The cradle and/or the dock may provide the connection with other devices. For example, the earbuds may be connected to the user's computer, pc, smart phone etc via the cradle and/or the dock, and thus the earbuds may be ready to use when the user gets a call, even when the earbuds are charging and docked in cradle.

It is an advantage that the dock may provide that users are nudged and reminded to place the earbuds in the cradle in the dock, ensuring that earbuds are recharged. In prior art earbuds it may be problem that battery power is used relative fast, and the user forget to recharge the earbuds. Thus, it is an advantage of the dock that when the dock is placed on a user's table, the dock is visible to the user and it may remind the user to place the earbuds in the cradle in the dock for recharging of the earbuds. Thus, the storage place for the earbuds during a day in the office may naturally be the cradle in the dock, which ensures that earbuds are recharged when not in use for e.g a call, and furthermore, it may be easier for the user to locate the earbuds, when they are stored in the cradle in the dock.

Thus, it is an advantage that the dock may provide a good "home" on the user's desk for the earbuds and the cradle when the earbuds are not in use, e.g. for a call.

It is an advantage that when the cradle is fixated in the dock, the lid of the cradle may be open as a default, and with the cradle lid open on the desk being ready to receive the earbuds, it is assumed that the user will be nudged to put the earbuds back in the cradle for storage and charging. Thus, the earbuds may be configured to not turn off when they are docked in the cradle in the dock.

The dock may comprise a first surface configured to be arranged on a surface. The first surface may be a bottom/lower surface configured to be arranged on the surface e.g. a desk or table.

The dock may comprise a second surface, where the user interface may be arranged at the second surface. The second surface may be a front surface. The second surface may be flat, may be bend, may be curved, may be having an angle relative the first surface, such as an angle of about 45 degrees.

The dock may have a third surface, which may be a top surface, pointing towards the ceiling. The third surface may be parallel with the first surface. The fixation means may be arranged on the third surface, or arranged in a recess of the third surface.

In some embodiments, the user interface comprises a touch screen. The touch screen may be configured for receiving and reacting to touch input, such as touch gestures, by the user's fingers. It is an advantage that the functionalities of the earbuds may be controlled via the touch screen of the user interface of the dock.

In some embodiments, the user interface comprises a display. The display may be configured for displaying visual information of the earbuds, of the cradle, of the dock etc. The display may be configured for receiving and reacting to touch input, such as touch gestures, by the user's fingers. It is an advantage that the functionalities of the earbuds may be controlled via the display of the user interface of the dock.

In some embodiments, the earbuds are configured to be connected via Bluetooth to known devices, and the display is configured for displaying the Bluetooth name of the known devices(s) for the earbuds, and the user interface is configured for enabling switching the Bluetooth connection between the known device(s). This is an advantage, because in prior art earbud products it may be a problem to understand which known Bluetooth devices the earbuds are connected to. Thus, displaying the Bluetooth name of the connected device and of the known devices, and enabling the user to switch between these Bluetooth devices is advantage to have on the cradle dock. It is an advantage to have a user interface, e.g. a screen or a display, on the dock for providing a good user experience for showing and switching between connected Bluetooth devices. It is an advantage to have this function in the dock compared to having it in a smartphone app, because if this function is provided in a smartphone app, then the Bluetooth connection may be lost, if the user decides to disconnect the Bluetooth device in the app user interface on the smartphone. Thus, the dock for the cradle is optimal for this function.

In some embodiments, the user interface comprises one or more physical buttons. Thus, it is an advantage that the functionality of the earbuds may be controlled via the physical buttons on the user interface.

In some embodiments, the functionalities of the user interface comprise one or more of:
- call control;
- volume control;
- mute control;
- connectivity with other devices;
- antenna performance;
- noise indicator of background noise;
- control for cloud communication service;
- battery status;
- settings/configuration control;
- control for external microphone;
- control for dongle for wireless communication

The call control may be to accept, decline or end a call being conducted with the earbuds.

The volume control may be to raise or lower the volume of sound in the earbuds, e.g. volume of music or voice.

The mute control may be to mute microphone or speaker in the earbuds, e.g. during a call.

The connectivity with other devices may be e.g. Bluetooth connections with other known device(s), such as showing and controlling the Bluetooth connection between the earbuds and other Bluetooth device, such as pc, phone, speakerphone, music device etc.

The antenna performance may be performance, such as quality, of the Bluetooth antenna, the Wi-Fi antenna etc.

The noise indicator of background noise may indicate the level of detected background noise in the surroundings.

The control for cloud communication service may be control such as for MS Teams, Zoom, Google Meet, where the earbuds may be used for the sound. The control may e.g. be for accepting/declining calls, for initiation and declining calls, for controlling the volume of the sound in the call etc.

The battery status may be the battery status of the earbuds, such as showing the level of battery power, such as alarming if the battery power is low etc.

The battery status may also be the battery status of the cradle.

The settings and/or configuration control may be different settings and/or configuration for the earbuds.

The control for external microphone may be controlling if an external microphone shall be used e.g. for a call, and in such case, selecting which external microphone to use, e.g. the microphone of a connected pc, the microphone of a connected phone, the microphone of a connected speakerphone etc.

The control for dongle for wireless communication may be for controlling an extended range of wireless communication, such as Bluetooth LE (low energy).

Thus, it is an advantage that a variety of functionalities of the user interface for controlling the earbuds can be provided via the dock.

In some embodiments, the fixation means comprises a first magnetic element, where the first magnetic element is configured for magnetic attraction with a second magnetic element of the cradle. It is an advantage that the fixation of the cradle in the dock may be by means of magnetic elements, i.e. by means of magnetic attraction.

In some embodiments, the fixation means comprises a plug, and wherein the plug is configured to attach in/to a corresponding socket of the cradle. The plug may e.g. be a USB-C type plug. It is an advantage that the fixation of the cradle in the dock may be by means of plug and socket, i.e. by means of a standard plug.

In some embodiments, the fixation means comprises a recess which is configured to match with an outer shape of the cradle. The outer shape of the cradle may be corresponding or matching with the recess of the fixation means of the dock. The outer shape of the cradle may e.g. be a protruding shape, a convex shape, or the like. The recess of the fixation means of the dock may have a concave shape. It is an advantage that the fixation of the cradle in the dock may be by means of a mechanical fixation caused by specific matching shapes of the cradle and the dock.

In some embodiments, the fixation means comprises an adaptor which is configured to match with the cradle. It is an advantage of the adaptor that it may ensure fitting with future versions of the cradle. It is an advantage that the fixation of the cradle in the dock may be by means of a future-proof adaptor.

In some embodiments, the dock is connected with the cradle, when the cradle is fixated in the dock.

In some embodiments, the dock is configured to connect with the cradle by means of wireless connection or via pogo-pins.

In some embodiments, the dock provides that when the cradle is fixated in the dock and the earbuds are in the cradle, rechargeable batteries of the earbuds are configured to be charged by the cradle via the dock. Thus, the dock may charge the cradle, and the cradle may then charge the earbuds. The battery charging may be via wireless charging. The dock may be connected to electrical power, e.g. via a power outlet.

The cradle may also comprise a rechargeable battery, which may be used for recharging the earbuds. The rechargeable battery of the cradle may also be charged by the dock, either via pogo pins or wirelessly, e.g. by the QI standard.

In some embodiments, the dock provides that when the cradle is fixated in the dock and the earbuds are in the cradle, the earbuds are configured to wirelessly connect with one or more electronic devices associated with the user. The earbuds may also be wirelessly connected with electronic devices, when the earbuds are not arranged in the cradle. The electronic devices may e.g. be a computer, a pc, a tablet, a phone etc.

The earbuds may be configured to be wirelessly connected with the dock.

In some embodiments, the dock is configured to be connected with the one or more electronic device associated with the user. The electronic devices may e.g. be a computer, a pc, a MacBook, a tablet, a phone etc. It is an advantage that the dock may be connected with an electronic device, because the dock may then receive electric power from the electronic device and thus the dock does not need its own power cable to a power outlet, or its own battery.

Furthermore, it is an advantage that the dock is connected with the electronic device, which can be the user's pc, where programs/apps where the earbuds are used, are running, e.g. MS Teams call, IP phone calls, music/radio etc.

In some embodiments, the connection between the dock and the one or more electronic devices is wireless and/or wired. In case of wireless connection, the dock may comprise an antenna, a transceiver etc, for providing e.g. a Bluetooth connection to the electronic device. In case of a wired connection, the dock may comprise a UBS connector for connection with the electronic device via a USB cable.

In some embodiments, the dock comprises a first trigger component which is configured for providing that a lid of the cradle opens when the cradle is fixated in the dock. It is an advantage that the lid of the cradle opens, when the cradle is fixated in the dock, because then the earbuds in the cradle are visible to the user, easy to take out of the cradle by the user etc.

In an embodiment, the earbuds are configured to be worn by a user. The earbuds may be arranged at the user's ear, on the user's ear, over the user's ear, in the user's ear, in the user's ear canal, behind the user's ear and/or in the user's concha, i.e., the earbuds are configured to be worn in, on, over and/or at the user's ear. The user may wear two earbuds, one earbud at each ear. The two earbuds may be connected, such as wirelessly connected to each other.

The earbuds may be a hearable such as a headset, headphone, earphone, hearing aid, a personal sound amplification product (PSAP), an over-the-counter (OTC) earbud, a hearing protection device, a one-size-fits-all earbud, a custom earbuds or another head-wearable earbud.

The earbuds may be custom devices, meaning that the earbud may comprise a housing having a shell made from a hard material, such as a hard polymer or metal, or a soft material such as a rubber-like polymer, molded to have an outer shape conforming to the shape of the specific user's ear canal.

In an embodiment, the earbuds may comprise one or more input transducers. The one or more input transducers may comprise one or more microphones. The one or more input transducers may comprise one or more vibration sensors configured for detecting bone vibration. The one or more input transducer(s) may be configured for converting an acoustic signal into a first electric input signal. The first electric input signal may be an analogue signal. The first electric input signal may be a digital signal. The one or more input transducer(s) may be coupled to one or more analogue-to-digital converter(s) configured for converting the analogue first input signal into a digital first input signal.

In an embodiment, the earbuds may comprise one or more antenna(s) configured for wireless communication. The one or more antenna(s) may comprise an electric antenna. The electric antenna may be configured for wireless communication at a first frequency. The first frequency may be above 800 MHz, preferably a wavelength between 900 MHz and 6 GHz. The first frequency may be 902 MHz to 928 MHz. The first frequency may be 2.4 to 2.5 GHz. The first frequency may be 5.725 GHz to 5.875 GHz. The one or more antenna(s) may comprise a magnetic antenna. The magnetic antenna may comprise a magnetic core. The magnetic antenna may comprise a coil. The coil may be coiled around the magnetic core. The magnetic antenna may be configured for wireless communication at a second frequency. The second frequency may be below 100 MHz. The second frequency may be between 9 MHz and 15 MHz.

In an embodiment, the earbuds may comprise one or more wireless communication unit(s). The one or more wireless communication unit(s) may comprise one or more wireless receiver(s), one or more wireless transmitter(s), one or more transmitter-receiver pair(s) and/or one or more transceiver(s). At least one of the one or more wireless communication unit(s) may be coupled to the one or more antenna(s). The wireless communication unit may be configured for converting a wireless signal received by at least one of the one or more antenna(s) into a second electric input signal. The earbuds may be configured for wired/wireless audio communication, e.g. enabling the user to listen to media, such as music or radio and/or enabling the user to perform phone calls.

In an embodiment, the wireless signal may originate from one or more external source(s) and/or external devices, such as spouse microphone device(s), wireless audio transmitter(s), smart computer(s) and/or distributed microphone array(s) associated with a wireless transmitter. The wireless input signal(s) may origin from one or more accessory device(s), such as a smartphone and/or a smart watch.

In an embodiment, the earbuds may include a processing unit. The processing unit may be configured for processing the first and/or second electric input signal(s). The processing may comprise compensating for a hearing loss of the user, i.e., apply frequency dependent gain to input signals in accordance with the user's frequency dependent hearing impairment. The processing may comprise performing feedback cancelation, beamforming, tinnitus reduction/masking, noise reduction, noise cancellation, speech recognition, bass adjustment, treble adjustment and/or processing of user input. The processing unit may be a processor, an integrated circuit, an application, functional module, etc. The processing unit may be implemented in a signal-processing chip or a printed circuit board (PCB). The processing unit may be configured to provide a first electric output signal based on the processing of the first and/or second electric input signal(s). The processing unit may be configured to provide a second electric output signal. The second electric output signal may be based on the processing of the first and/or second electric input signal(s).

In an embodiment, the earbuds may comprise an output transducer. The output transducer may be coupled to the processing unit. The output transducer may be a speaker or a receiver. It is noted that in this context, a receiver may be a loudspeaker, whereas a wireless receiver may be a device configured for processing a wireless signal. The speaker or receiver may be configured for converting the first electric output signal into an acoustic output signal. The output transducer may be coupled to the processing unit via the magnetic antenna.

In an embodiment, the wireless communication unit may be configured for converting the second electric output signal into a wireless output signal. The wireless output signal may comprise synchronization data. The wireless communication unit may be configured for transmitting the wireless output signal via at least one of the one or more antennas.

In an embodiment, the earbuds may comprise a digital-to-analogue converter configured to convert the first electric output signal, the second electric output signal and/or the wireless output signal into an analogue signal.

In an embodiment, the earbuds may comprise a power source. The power source may comprise a battery providing a first voltage. The battery may be a rechargeable battery. The battery may be a replaceable battery. The power source may comprise a power management unit. The power management unit may be configured to convert the first voltage into a second voltage. The power source may comprise a charging coil. The charging coil may be provided by the magnetic antenna.

In an embodiment, the earbuds may comprise a memory, including volatile and non-volatile forms of memory.

The present invention relates to different aspects including the dock, the cradle and the earbuds described above and in the following, and corresponding systems, devices and device parts, each yielding one or more of the benefits and advantages described in connection with the first mentioned aspect, and each having one or more embodiments corresponding to the embodiments described in connection with the first mentioned aspect and/or disclosed in the appended claims.

### BRIEF DESCRIPTION OF THE DRAWINGS

The above and other features and advantages will become readily apparent to those skilled in the art by the following detailed description of exemplary embodiments thereof with reference to the attached drawings, in which:
Fig. 1a and 1b schematically illustrate an exemplary dock 2 for a cradle, the dock having a user interface 8 and a fixation means 10.
Fig. 2a and 2b schematically illustrate an exemplary dock 2 for a cradle, the dock having a user interface 8 and a fixation means 10.
Fig. 3a and 3b schematically illustrate an exemplary dock 2 for a cradle 4, the cradle 4 accommodating a pair of earbuds 6 for a user, and the dock having a user interface 8 and a fixation means 10.
Fig. 4a and 4b schematically illustrate an exemplary dock 2 for a cradle 4, the cradle 4 accommodating a pair of earbuds 6 for a user, and the dock having a user interface 8 and a fixation means 10.
Fig. 5a and 5b schematically illustrate an exemplary dock 2 for a cradle 4, and a pair of earbuds 6, and the wired/wireless connections between these elements.
Fig. 6a and 6b schematically illustrate an exemplary dock 2 for a cradle 4, and a pair of earbuds 6, and the wired/wireless connections between these elements.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

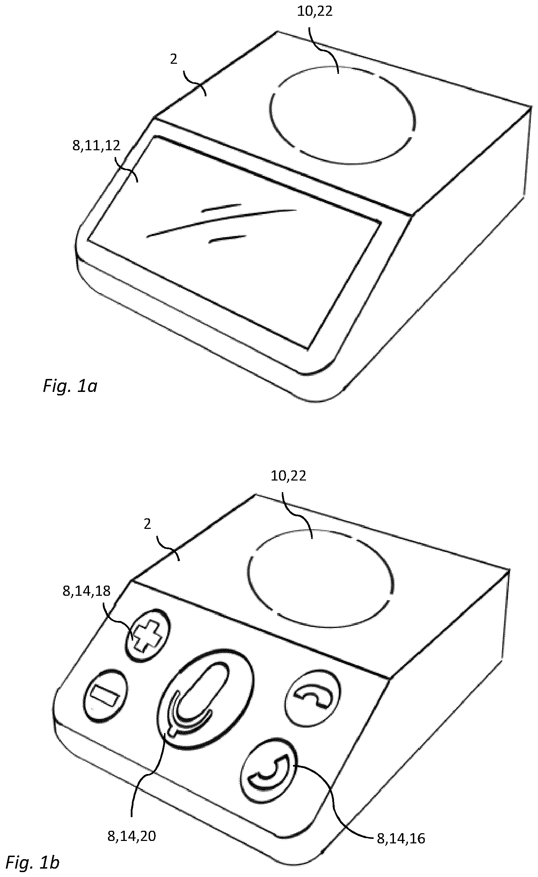

Fig. 1a schematically illustrates an exemplary dock 2 for a cradle (not shown). The cradle being configured for accommodating a pair of earbuds (not shown) for a user. The dock 2 comprising a user interface 8 configured for providing control of one or more functionalities of the earbuds. The dock 2 comprising a fixation means 10 configured for fixating the cradle in the dock.

In fig. 1a, the user interface 8 comprises a touch screen 11 or a display 12.

In fig. 1a, the fixation means 10 comprises a first magnetic element 22, where the first magnetic element 22 is configured for magnetic attraction with a second magnetic element (not shown) of the cradle.

Fig. 1b schematically illustrates an exemplary dock 2 for a cradle (not shown). The cradle being configured for accommodating a pair of earbuds (not shown) for a user. The dock 2 comprising a user interface 8 configured for providing control of one or more functionalities of the earbuds. The dock 2 comprising a fixation means 10 configured for fixating the cradle in the dock.

In fig. 1b, the user interface 8 comprises one or more physical buttons 14.

Fig. 1b shows that the functionalities of the user interface may comprise one or more of call control 16; volume control 18; and mute control 20.

In fig. 1b, the fixation means 10 comprises a first magnetic element 22, where the first magnetic element 22 is configured for magnetic attraction with a second magnetic element (not shown) of the cradle.

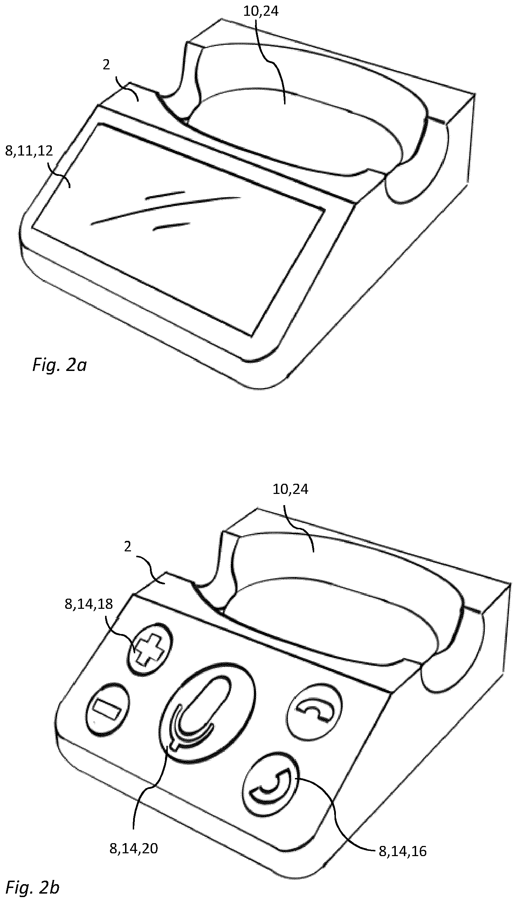

Fig. 2a schematically illustrates an exemplary dock 2 for a cradle (not shown). The cradle being configured for accommodating a pair of earbuds (not shown) for a user. The dock 2 comprising a user interface 8 configured for providing control of one or more functionalities of the earbuds. The dock 2 comprising a fixation means 10 configured for fixating the cradle in the dock 2.

In fig. 2a, the user interface 8 comprises a touch screen 11 or a display 12.

In fig. 2a, the fixation means 10 comprises a recess 24 which is configured to match with an outer shape of the cradle.

Fig. 2b schematically illustrates an exemplary dock 2 for a cradle (not shown). The cradle being configured for accommodating a pair of earbuds (not shown) for a user. The dock 2 comprising a user interface 8 configured for providing control of one or more functionalities of the earbuds. The dock 2 comprising a fixation means 10 configured for fixating the cradle in the dock 2.

In fig. 2b, the user interface 8 comprises one or more physical buttons 14.

Fig. 2b shows that the functionalities of the user interface may comprise one or more of call control 16; volume control 18; and mute control 20.

In fig. 2b, the fixation means 10 comprises a recess 24 which is configured to match with an outer shape of the cradle.

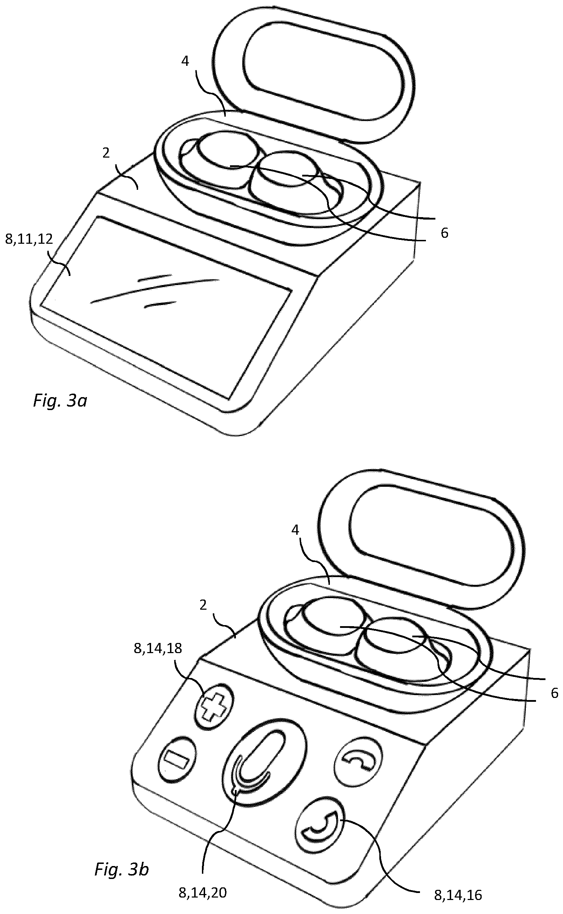

Fig. 3a schematically illustrates an exemplary dock 2 for a cradle 4. The cradle 4 being configured for accommodating a pair of earbuds 6 for a user. The dock 2 comprising a user interface 8 configured for providing control of one or more functionalities of the earbuds 6. The dock 2 comprising a fixation means 10 configured for fixating the cradle 4 in the dock 2.

In fig. 3a, the user interface 8 comprises a touch screen 11 or a display 12.

In fig. 3a, the fixation means 10 comprises a first magnetic element (not visible here, but see fig. 1a), where the first magnetic element is configured for magnetic attraction with a second magnetic element (not shown) of the cradle 4. The second magnetic element may be arranged on the bottom surface of the cradle 4.

Fig. 3b schematically illustrates an exemplary dock 2 for a cradle 4. The cradle 4 being configured for accommodating a pair of earbuds 6 for a user. The dock 2 comprising a user interface 8 configured for providing control of one or more functionalities of the earbuds 6. The dock 2 comprising a fixation means 10 configured for fixating the cradle 4 in the dock 2.

In fig. 3b, the user interface 8 comprises one or more physical buttons 14.

Fig. 3b shows that the functionalities of the user interface may comprise one or more of call control 16; volume control 18; and mute control 20.

In fig. 3b, the fixation means 10 comprises a first magnetic element (not visible here, but see fig. 1a), where the first magnetic element is configured for magnetic attraction with a second magnetic element (not shown) of the cradle 4. The second magnetic element may be arranged on the bottom surface of the cradle 4.

In fig. 3a and 3b, the dock 2 is connected with the cradle 4, when the cradle 4 is fixated in the dock 2. The dock 2 is configured to connect with the cradle 4 by means of a wireless connection or via pogo-pins. The dock 2 provides that when the cradle 4 is fixated in the dock 2, and the earbuds 6 are in the cradle 4, rechargeable batteries of the earbuds 4 are configured to be charged by the cradle 4 via the dock 2. The dock 2 provides that when the cradle 4 is fixated in the dock 2, and the earbuds 6 are in the cradle 4, the earbuds 6 are configured to wirelessly connect with one or more electronic devices (not shown) associated with the user. The cradle 4 also typically comprises a rechargeable battery, which is used for recharging the earbuds 6. The rechargeable battery of the cradle 4 may also be charged by the dock 2, either via pogo pins or wirelessly, e.g by the QI standard.

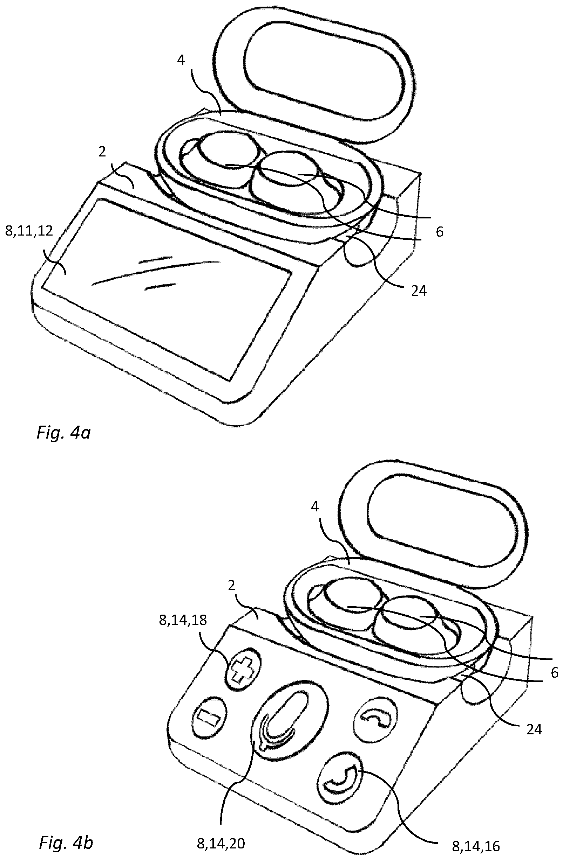

Fig. 4a schematically illustrates an exemplary dock 2 for a cradle 4. The cradle 4 being configured for accommodating a pair of earbuds 6 for a user. The dock 2 comprising a user interface 8 configured for providing control of one or more functionalities of the earbuds 6. The dock 2 comprising a fixation means 10 configured for fixating the cradle 4 in the dock 2.

In fig. 4a, the user interface 8 comprises a touch screen 11 or a display 12.

In fig. 4a, the fixation means 10 comprises a recess 24 which is configured to match with an outer shape of the cradle 4.

Fig. 4b schematically illustrates an exemplary dock 2 for a cradle 4. The cradle 4 being configured for accommodating a pair of earbuds 6 for a user. The dock 2 comprising a user interface 8 configured for providing control of one or more functionalities of the earbuds 6. The dock 2 comprising a fixation means 10 configured for fixating the cradle 4 in the dock 2.

In fig. 4b, the user interface 8 comprises one or more physical buttons 14.

Fig. 4b shows that the functionalities of the user interface may comprise one or more of call control 16; volume control 18; and mute control 20.

In fig. 4b, the fixation means 10 comprises a recess 24 which is configured to match with an outer shape of the cradle 4.

In fig. 4a and 4b, the dock 2 is connected with the cradle 4, when the cradle 4 is fixated in the dock 2. The dock 2 is configured to connect with the cradle 4 by means of a wireless connection or via pogo-pins. The dock 2 provides that when the cradle 4 is fixated in the dock 2, and the earbuds 6 are in the cradle 4, rechargeable batteries of the earbuds 4 are configured to be charged by the cradle 4 via the dock 2. The dock 2 provides that when the cradle 4 is fixated in the dock 2, and the earbuds 6 are in the cradle 4, the earbuds 6 are configured to wirelessly connect with one or more electronic devices (not shown) associated with the user.

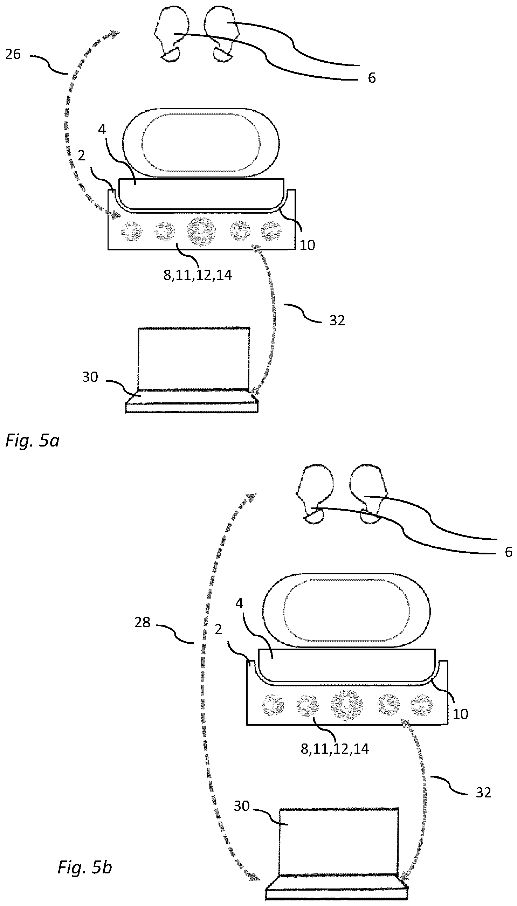

Fig. 5a and 5b schematically illustrate an exemplary dock 2 for a cradle 4. The cradle 4 being configured for accommodating a pair of earbuds 6 for a user. The dock 2 comprising a user interface 8 configured for providing control of one or more functionalities of the earbuds 6. The dock 2 comprising a fixation means 10 configured for fixating the cradle 4 in the dock 2.

The user interface 8 may comprise a touch screen 11, a display 12, and/or one or more physical buttons 14.

The functionalities of the user interface 8 may comprise one or more of call control; volume control; and mute control.

The fixation means 10 may comprise a first magnetic element, where the first magnetic element is configured for magnetic attraction with a second magnetic element of the cradle. The fixation means 10 may comprise a plug, and wherein the plug is configured to attach in/to a corresponding socket of the cradle 4. The fixation means 10 may comprise a recess which is configured to match with an outer shape of the cradle 4. The fixation means 10 may comprise an adaptor which is configured to match with the cradle 4.

Fig. 5a schematically illustrates that the earbuds 6 are configured to be wirelessly connected 26 with the dock 2.

Fig. 5b schematically illustrates that the dock 2 provides that when the cradle 4 is fixated in the dock 2, the earbuds 6 are configured to wirelessly connect 28 with one or more electronic devices 30 associated with the user, also when the earbuds 6 are not in the cradle 4, but when the earbuds 6 are outside the cradle 4, such as being worn in the user's ears.

Fig. 5a and 5b schematically illustrate that the dock 2 is configured to be connected 32 with the one or more electronic devices 30 associated with the user. In fig. 5a and 5b, the connection 32 between the dock 2 and the one or more electronic devices 30 is wired.

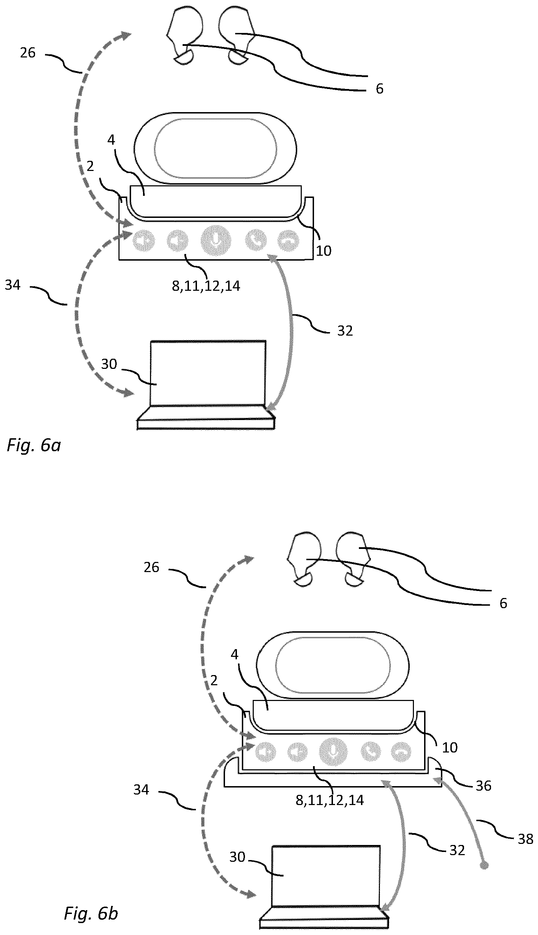

Fig. 6a and 6b schematically illustrate an exemplary dock 2 for a cradle 4. The cradle 4 being configured for accommodating a pair of earbuds 6 for a user. The dock 2 comprising a user interface 8 configured for providing control of one or more functionalities of the earbuds 6. The dock 2 comprising a fixation means 10 configured for fixating the cradle 4 in the dock 2.

The user interface 8 may comprise a touch screen 11, a display 12, and/or one or more physical buttons 14.

The functionalities of the user interface 8 may comprise one or more of call control; volume control; and mute control.

The fixation means 10 may comprise a first magnetic element, where the first magnetic element is configured for magnetic attraction with a second magnetic element of the cradle. The fixation means 10 may comprise a plug, and wherein the plug is configured to attach in/to a corresponding socket of the cradle 4. The fixation means 10 may comprise a recess which is configured to match with an outer shape of the cradle 4. The fixation means 10 may comprise an adaptor which is configured to match with the cradle 4.

Fig. 6a and 6b schematically illustrate that the earbuds 6 are configured to be wirelessly connected 26 with the dock 2.

Fig. 6a and 6b schematically illustrate that the dock 2 is configured to be connected 32 with the one or more electronic devices 30 associated with the user. In fig. 6a and 6b, the connection 32 between the dock 2 and the one or more electronic devices 30 is shown to be wired 32 and/or wireless 34.

Fig. 6b schematically illustrates that the dock 2 may be arranged on a support 36, and that the support 36 has as power cable 38 connected to a power outlet.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications and equivalents.

### ITEMS:

1. A dock for a cradle, the cradle being configured for accommodating a pair of earbuds for a user, the dock comprising:
   - a user interface configured for providing control of one or more functionalities of the earbuds;
   - a fixation means configured for fixating the cradle in the dock.
2. The dock according to any of the preceding items, wherein the user interface comprises a touch screen.
3. The dock according to any of the preceding items, wherein the user interface comprises a display.
4. The dock according to the preceding item, wherein the earbuds are configured to be connected via Bluetooth to known devices, and wherein the display is configured for displaying the Bluetooth name of the known devices(s) for the earbuds, and wherein the user interface is configured for enabling switching the Bluetooth connection between the known device(s).
5. The dock according to any of the preceding items, wherein the user interface comprises one or more physical buttons.
6. The dock according to any of the preceding items, wherein the functionalities of the user interface comprise one or more of:
   - call control;
   - volume control;
   - mute control;
   - connectivity with other devices;
   - antenna performance;
   - noise indicator of background noise;
   - control for cloud communication service;
   - battery status;
   - settings/configuration control;
   - control for external microphone;
   - control for dongle for wireless communication
7. The dock according to any of the preceding items, wherein the fixation means comprises a first magnetic element, where the first magnetic element is configured for magnetic attraction with a second magnetic element of the cradle.
8. The dock according to any of the preceding items, wherein the fixation means comprises a plug, and wherein the plug is configured to attach in/to a corresponding socket of the cradle.
9. The dock according to any of the preceding items, wherein the fixation means comprises a recess which is configured to match with an outer shape of the cradle.
10. The dock according to any of the preceding items, wherein the fixation means comprises an adaptor which is configured to match with the cradle.
11. The dock according to any of the preceding items, wherein the dock is connected with the cradle, when the cradle is fixated in the dock.
12. The dock according to any of the preceding items, wherein the dock is configured to connect with the cradle by means of wireless connection or via pogo-pins.
13. The dock according to any of the preceding items, wherein the dock provides that when the cradle is fixated in the dock and the earbuds are in the cradle, rechargeable batteries of the earbuds are configured to be charged by the cradle via the dock.
14. The dock according to any of the preceding items, wherein the dock provides that when the cradle is fixated in the dock and the earbuds are in the cradle, the earbuds are configured to wirelessly connect with one or more electronic devices associated with the user.
15. The dock according to the preceding item, wherein the dock is configured to be connected with the one or more electronic device associated with the user.
16. The dock according to the preceding item, wherein the connection between the dock and the one or more electronic devices is wireless and/or wired.
17. The dock according to any of the preceding items, wherein the dock comprises a first trigger component which is configured for providing that a lid of the cradle opens when the cradle is fixated in the dock.

### LIST OF REFERENCES

2 dock
4 cradle
6 earbuds
8 user
10 fixation means
11 touch screen
12 display
14 physical buttons
16 functionality being call control
18 functionality being volume control
20 functionality being mute control
22 first magnetic element
24 recess
26 wireless connection between dock 2 and earbuds 6
28 wireless connection between electronic device 30 and earbuds 6
30 electronic device(s)
32 wired connection between dock 2 and electronic device 30
34 wireless connection between dock 2 and electronic device 30
36 support
38 power cable

## Claims

1. A dock for a cradle, the cradle being configured for accommodating a pair of earbuds for a user, the dock comprising:
- a user interface configured for providing control of one or more functionalities of the earbuds;
- a fixation means configured for fixating the cradle in the dock.

2. The dock according to any of the preceding claims, wherein the user interface comprises a touch screen.

3. The dock according to any of the preceding claims, wherein the user interface comprises a display.

4. The dock according to the preceding claim, wherein the earbuds are configured to be connected via Bluetooth to known devices, and wherein the display is configured for displaying the Bluetooth name of the known devices(s) for the earbuds, and wherein the user interface is configured for enabling switching the Bluetooth connection between the known device(s).

5. The dock according to any of the preceding claims, wherein the user interface comprises one or more physical buttons.

6. The dock according to any of the preceding claims, wherein the functionalities of the user interface comprise one or more of:
- call control;
- volume control;
- mute control;
- connectivity with other devices;
- antenna performance;
- noise indicator of background noise;
- control for cloud communication service;
- battery status;
- settings/configuration control;
- control for external microphone;
- control for dongle for wireless communication

7. The dock according to any of the preceding claims, wherein the fixation means comprises a first magnetic element, where the first magnetic element is configured for magnetic attraction with a second magnetic element of the cradle.

8. The dock according to any of the preceding claims, wherein the fixation means comprises a plug, and wherein the plug is configured to attach in/to a corresponding socket of the cradle.

9. The dock according to any of the preceding claims, wherein the fixation means comprises a recess which is configured to match with an outer shape of the cradle.

10. The dock according to any of the preceding claims, wherein the fixation means comprises an adaptor which is configured to match with the cradle.

11. The dock according to any of the preceding claims, wherein the dock is connected with the cradle, when the cradle is fixated in the dock.

12. The dock according to any of the preceding claims, wherein the dock is configured to connect with the cradle by means of wireless connection or via pogo-pins.

13. The dock according to any of the preceding claims, wherein the dock provides that when the cradle is fixated in the dock and the earbuds are in the cradle, rechargeable batteries of the earbuds are configured to be charged by the cradle via the dock.

14. The dock according to any of the preceding claims, wherein the dock provides that when the cradle is fixated in the dock and the earbuds are in the cradle, the earbuds are configured to wirelessly connect with one or more electronic devices associated with the user.

15. The dock according to the preceding claim, wherein the dock is configured to be connected with the one or more electronic device associated with the user.
